(19) Europäisches Patentamt
European Patent Office
Office européen des brevets

(11) **EP 4 471 725 A1**

(12) **EUROPEAN PATENT APPLICATION**
published in accordance with Art. 153(4) EPC

(43) Date of publication:
04.12.2024 Bulletin 2024/49

(51) International Patent Classification (IPC):
*G06T 15/00* (2011.01)    *G06T 15/80* (2011.01)
*H04N 5/14* (2006.01)

(21) Application number: 23854116.3

(52) Cooperative Patent Classification (CPC):
G06T 15/005; A63F 13/52; A63F 13/60;
G06T 15/00; G06T 15/04; G06T 15/80; H04N 5/14

(22) Date of filing: 29.06.2023

(86) International application number:
PCT/CN2023/103742

(87) International publication number:
WO 2024/037211 (22.02.2024 Gazette 2024/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.08.2022 CN 202210990935

(71) Applicant: Huawei Technologies Co., Ltd.
Shenzhen, Guangdong 518129 (CN)

(72) Inventors:
• WANG, Shu
Shenzhen, Guangdong 518129 (CN)
• YANG, Qihang
Shenzhen, Guangdong 518129 (CN)
• YANG, Chengyun
Shenzhen, Guangdong 518129 (CN)
• FENG, Shaobo
Shenzhen, Guangdong 518129 (CN)

(74) Representative: Körber, Martin Hans
Mitscherlich PartmbB
Patent- und Rechtsanwälte
Karlstraße 7
80333 München (DE)

(54) **SHADING METHOD, SHADING APPARATUS, AND ELECTRONIC DEVICE**

(57) Embodiments of this application provide a shading method, a shading apparatus, and an electronic device. The method includes: obtaining rendering information of an image, where the rendering information includes a main scene rendering texture, camera information, model view projection MVP matrix information of a rendering object, and a user interface UI rendering texture; determining a first guide image based on the main scene rendering texture, the camera information, and the MVP matrix information of the rendering object; determining a second guide image based on the UI rendering texture; determining a third guide image based on the first guide image and the second guide image; and shading the third guide image. In the method, the first guide image and the second guide image are determined, and the third guide image is determined by combining the two guide images. Shading rates of different regions can be accurately identified and marked in the third guide image. This achieves better effect of shading processing completed by the electronic device based on the third guide image, and further improves rendering performance.

S1501: Obtain image rendering information

S1502: Determine a first guide image

S1503: Determine a second guide image

S1504: Determine a third guide image based on the first guide image and the second guide image

S1505: Perform shading on the third guide image

FIG. 15

## Description

This application claims priority to Chinese Patent Application No. 202210990935.3, filed with the China National Intellectual Property Administration on August 18, 2022 and entitled "SHADING METHOD, SHADING APPARATUS, AND ELECTRONIC DEVICE", which is incorporated herein by reference in its entirety.

## TECHNICAL FIELD

Embodiments of this application relate to the field of electronic devices, and in particular, to a shading method, a shading apparatus, and an electronic device.

## BACKGROUND

With continuous progress of science and technologies, a resolution and a refresh rate of a screen of an electronic device are continuously improved, and a user's requirement on shading calculation is also increasing. Shading is a step with a high bandwidth requirement on a calculation capability of the electronic device in a rendering process. In order to meet an actual requirement of shading, a flexible shading mechanism, namely, variable rate shading (variable rate shading, VRS), is proposed. In the shading mechanism, an image region may be divided into a lower-rate shading region and a higher-rate shading region to perform shading. This can improve rendering performance without reducing output image quality that can be perceived by a user.

However, how to improve accuracy of identifying an image region through variable rate shading and further improve rendering performance is a problem to be urgently resolved currently.

## SUMMARY

Embodiments of this application provide a shading method, a shading apparatus, and an electronic device. The method can improve accuracy of identifying a region through variable rate shading, and further improve rendering performance.

According to a first aspect, a shading method is provided. The method includes:

obtaining rendering information of an image, where the rendering information includes a main scene rendering texture, camera information, model view projection MVP matrix information of a rendering object, and a user interface UI rendering texture, the image includes N image regions, each of the N image regions includes M pixels, N is a positive integer greater than or equal to 1, and M is a positive integer greater than or equal to 1; determining a first guide image based on the main scene rendering texture, the camera information, and the MVP matrix information of the rendering object; determining a second guide image based on the UI rendering texture;

determining a third guide image based on the first guide image and the second guide image, where the third guide image includes a lower-rate shading region of the third guide image or a higher-rate shading region of the third guide image; and shading the third guide image.

It should be understood that one image may be tiled into a plurality of regions, and each region has a pixel of a specific size. Optionally, M is 256 (16x 16). The electronic device may allocate 32 threads to each tile for parallel calculation, to accelerate an algorithm execution rate.

In embodiments of this application, an electronic device determines the first guide image based on the main scene rendering texture, the camera information, and the MVP matrix information of the rendering object; determines the second guide image based on the UI rendering texture; and determines the third guide image by combining the first guide image and the second guide image. Shading rates of different regions can be accurately identified and marked in the third guide image. This achieves better effect of shading processing completed by the electronic device based on the third guide image, and further improves rendering performance.

With reference to the first aspect, in some implementations of the first aspect, the shading the third guide image includes: shading the higher-rate shading region of the third guide image; and supplementing the lower-rate shading region of the third guide image according to an interpolation algorithm.

With reference to the first aspect, in some implementations of the first aspect, the supplementing the lower-rate shading region of the third guide image according to an interpolation algorithm includes: generating a depth checkerboard in the lower-rate region of the third guide image, where the depth checkerboard includes a first region or a second region, and a depth of the first region is different from a depth of the second region; shading the first region; and supplementing the second region according to the interpolation algorithm.

It should be understood that a depth value of the first region of the depth checkerboard is 1, and a depth value of the second region of the depth checkerboard is 0. The electronic device may not perform shading processing on the second region according to an early-z mechanism, but perform supplementing according to the interpolation algorithm. Supplementing may be understood as calculating a color value of each pixel in the region.

In embodiments of this application, regions whose depth is 0 are removed via a depth test, and then these regions are supplemented. This can perform shading processing on all regions of the image while reducing rendering overheads of the electronic device, and obtain better rendering performance.

With reference to the first aspect, in some implementations of the first aspect, the determining a first guide image based on the main scene rendering texture, the camera information, and the MVP matrix information of the rendering object includes: determining a first reference value based on a main scene rendering texture of a first image region, where the N image regions include the first image region; determining a second reference value based on camera information of the first image region and MVP matrix information of a rendering object in the first image region; determining a third reference value based on the first reference value and the second reference value; and determining the first guide image based on the third reference value and a first threshold, where the first threshold is determined based on luminance values of M pixels in the first image region.

It should be understood that the first reference value is a frequency domain information reference value, the second reference value is a motion rate information reference value, and the first threshold is an average value of the luminance values of the M pixels. A final reference value (the third reference value) is determined based on the frequency domain information reference value and the motion rate information reference value. Different pixels in a region (the first image region) of the image may have different frequency domain information, but a frequency domain information reference value of the region is specific, a motion rate reference value of the region is specific, and a first threshold of the region is also specific. The frequency domain information reference value, the motion rate information reference value, and the first threshold of each region may be determined for the region of the image (each image region). Different image regions may have same or different reference values or thresholds.

In embodiments of this application, the average value of the luminance values is set to the first threshold, so that the electronic device can adaptively identify and mark the shading rates of different image regions. This method can reduce unnecessary shading rates of some image regions, reduce shading overheads, and improve rendering performance while adapting to different rendering scenarios.

With reference to the first aspect, in some implementations of the first aspect, the determining the first guide image based on the third reference value and a first threshold includes: when the third reference value is greater than or equal to the first threshold, determining that the first image region is a higher-rate shading region of the first guide image; or when the third reference value is less than the first threshold, determining that the first image region is a lower-rate shading region of the first guide image.

It should be understood that different image regions may have different reference values and first thresholds. Therefore, different image regions may be classified into higher-rate shading regions or lower-rate shading regions.

In embodiments of this application, the first guide image determined based on the frequency domain information reference value and the motion rate reference value has higher accuracy, and is more convenient for the electronic device to perform subsequent shading processing.

With reference to the first aspect, in some implementations of the first aspect, the determining a first reference value based on a main scene rendering texture of a first image region includes: determining frequency domain information in a horizontal direction and frequency domain information in a vertical direction based on the main scene rendering texture of the first image region; and determining the first reference value based on the frequency domain information in the horizontal direction and the frequency domain information in the vertical direction.

It should be understood that high-pass filtering is performed on each image region of the image. Through high-pass filtering in the horizontal direction, a square root of an average value of a sum of squares of frequency domain information, in the horizontal direction, of all pixels in the image region is calculated to obtain the frequency domain information in the horizontal direction. Through high-pass filtering in the vertical direction, a square root of an average value of a sum of squares of frequency domain information, in the vertical direction, of all pixels in the image region is calculated to obtain the frequency domain information in the vertical direction. A greatest value of the obtained frequency domain information in the horizontal direction and the obtained frequency domain information in the vertical direction is used as a frequency domain information reference value (the first reference value) of the image region.

With reference to the first aspect, in some implementations of the first aspect, the determining a second reference value based on camera information of the first image region and MVP matrix information of the rendering object in a first image region includes: determining motion rate information based on the camera information of the first image region and the MVP matrix information of the rendering object in the first image region; and determining the second reference value based on the motion rate information.

It should be understood that displacement (motion rate information) of each pixel in an image region of the image is calculated, and a reciprocal of a smallest displacement value is used as a motion rate reference value.

With reference to the first aspect, in some implementations of the first aspect, the determining a second guide image based on the UI rendering texture includes: determining a fourth reference value based on a UI rendering texture of the first image region; and when the fourth reference value is greater than a second threshold, marking the first image region as a UI shield region of the second guide image.

It should be understood that, when the UI rendering texture is an independent texture, transparency of the UI rendering texture of a specific image region is determined based on blend. When alpha is greater than 0.2 and a sampled color is a non-initial color, the image region is marked as the UI shield region. Alternatively, when the UI rendering texture is a non-independent texture, the UI rendering texture needs to be split into an independent texture first.

According to a second aspect, a shading apparatus is provided, including: an interception module, configured to obtain rendering information of an image, where the rendering information includes a main scene rendering texture, camera information, model view projection MVP matrix information of a rendering object, and a user interface UI rendering texture, the image includes N image regions, each of the N image regions includes M pixels, N is a positive integer greater than or equal to 1, and M is a positive integer greater than or equal to 1; a first calculation module, configured to determine a first guide image based on the main scene rendering texture, the camera information, and the MVP matrix information of the rendering object; a second calculation module, configured to determine a second guide image based on the UI rendering texture; a decision guide module, configured to determine a third guide image based on the first guide image and the second guide image, where the third guide image includes a lower-rate shading region of the third guide image or a higher-rate shading region of the third guide image; and a variable rate shading module, configured to shade the third guide image.

It should be understood that the interception module may be a graphic application programming interface (Application Programming Interface, API) interception module in embodiments of this application. The first calculation module includes a frequency domain information calculation module and a motion rate calculation module in embodiments of this application. The second calculation module may be a user interface (user interface, UI) shielding region calculation module in embodiments of this application.

With reference to the second aspect, in some implementations of the second aspect, the variable rate shading module is specifically configured to shade the higher-rate shading region of the third guide image; and the variable rate shading module is further configured to supplement the lower-rate shading region of the third guide image according to an interpolation algorithm.

With reference to the second aspect, in some implementations of the second aspect, the variable rate shading module is specifically configured to generate a depth checkerboard in the lower-rate region of the third guide image, where the depth checkerboard includes a first region or a second region, and a depth of the first region is different from a depth of the second region; the variable rate shading module is further configured to shade the first region; and the variable rate shading module is further configured to supplement the second region according to the interpolation algorithm.

With reference to the second aspect, in some implementations of the second aspect, the first calculation module is specifically configured to determine a first reference value based on a main scene rendering texture of a first image region, where the N image regions include the first image region; the first calculation module is further configured to determine a second reference value based on camera information of the first image region and MVP matrix information of the rendering object in the first image region; the first calculation module is further configured to determine a third reference value based on the first reference value and the second reference value; and the decision guide module is specifically configured to determine the first guide image based on the third reference value and a first threshold, where the first threshold is determined based on luminance values of M pixels in the first image region.

With reference to the second aspect, in some implementations of the second aspect, the decision guide module is specifically configured to: when the third reference value is greater than or equal to the first threshold, determine that the first image region is a higher-rate shading region of the first guide image; or the decision guide module is specifically configured to: when the third reference value is less than the first threshold, determine that the first image region is a lower-rate shading region of the first guide image.

With reference to the second aspect, in some implementations of the second aspect, the first calculation module is specifically configured to determine frequency domain information in a horizontal direction and frequency domain information in a vertical direction based on the main scene rendering texture of the first image region; and the first calculation module is further configured to determine the first reference value based on the frequency domain information in the horizontal direction and the frequency domain information in the vertical direction.

With reference to the second aspect, in some implementations of the second aspect, the first calculation module is specifically configured to determine motion rate information based on the camera information of the first image region and the MVP matrix information of the rendering object in the first image region; and the first calculation module is further configured to determine the second reference value based on the motion rate information.

With reference to the second aspect, in some implementations of the second aspect, the second calculation module is specifically configured to determine a fourth reference value based on a UI rendering texture of the first image region; and the second calculation module is further configured to: when the fourth reference value is greater than a second threshold, mark the first image region as a UI shield region of the second guide image.

According to a third aspect, an electronic device is provided and includes one or more processors, and one or more memories. The one or more memories store one or more computer programs, the one or more computer programs include instructions, and when the instructions are executed by the one or more processors, the electronic device is enabled to perform the following steps: obtaining rendering information of an image, where the rendering information includes a main scene rendering texture, camera information, model view projection MVP matrix information of a rendering object, and a user interface UI rendering texture, the image includes N image regions, each of the N image regions includes M pixels, N is a positive integer greater than or equal to 1, and M is a positive integer greater than or equal to 1; determining a first guide image based on the main scene rendering texture, the camera information, and the MVP matrix information of the rendering object; determining a second guide image based on the UI rendering texture; determining a third guide image based on the first guide image and the second guide image, where the third guide image includes a lower-rate shading region of the third guide image or a higher-rate shading region of the third guide image; and shading the third guide image.

With reference to the third aspect, in some implementations of the third aspect, if the shading the third guide image, when the instructions are executed by the one or more processors, the electronic device is enabled to perform the following steps: shading the higher-rate shading region of the third guide image; and supplementing the lower-rate shading region of the third guide image according to an interpolation algorithm.

With reference to the third aspect, in some implementations of the third aspect, if the supplementing the lower-rate shading region of the third guide image according to an interpolation algorithm, when the instructions are executed by the one or more processors, the electronic device is enabled to perform the following steps: generating a depth checkerboard in the lower-rate region of the third guide image, where the depth checkerboard includes a first region or a second region, and a depth of the first region is different from a depth of the second region; shading the first region; and supplementing the second region according to the interpolation algorithm.

With reference to the third aspect, in some implementations of the third aspect, if the determining a first guide image based on the main scene rendering texture, the camera information, and the MVP matrix information of the rendering object, when the instructions are executed by the one or more processors, the electronic device is enabled to perform the following steps: determining a first reference value based on a main scene rendering texture of a first image region, where the N image regions include the first image region; determining a second reference value based on camera information of the first image region and MVP matrix information of a rendering object in the first image region; determining a third reference value based on the first reference value and the second reference value; and determining the first guide image based on the third reference value and a first threshold, where the first threshold is determined based on luminance values of M pixels in the first image region.

With reference to the third aspect, in some implementations of the third aspect, if the determining the first guide image based on the third reference value and a first threshold, when the instructions are executed by the one or more processors, the electronic device is enabled to perform the following step: when the third reference value is greater than or equal to the first threshold, determining that the first image region is a higher-rate shading region of the first guide image; or when the third reference value is less than the first threshold, determining that the first image region is a lower-rate shading region of the first guide image.

With reference to the third aspect, in some implementations of the third aspect, the determining a first reference value based on a main scene rendering texture of a first image region includes: determining frequency domain information in a horizontal direction and frequency domain information in a vertical direction based on the main scene rendering texture of the first image region; and determining the first reference value based on the frequency domain information in the horizontal direction and the frequency domain information in the vertical direction.

With reference to the third aspect, in some implementations of the third aspect, if the determining a second reference value based on camera information of the first image region and MVP matrix information of a rendering object in the first image region, when the instructions are executed by the one or more processors, the electronic device is enabled to perform the following steps: determining motion rate information based on the camera information of the first image region and the MVP matrix information of the rendering object in the first image region; and determining the second reference value based on the motion rate information.

With reference to the third aspect, in some implementations of the third aspect, if the determining a second guide image based on the UI rendering texture, when the instructions are executed by the one or more processors, the electronic device is enabled to perform the following steps: determining a fourth reference value based on a UI rendering texture of the first image region; and when the fourth reference value is greater than a second threshold, marking the first image region as a UI shield region of the second guide image.

According to a fourth aspect, an electronic device is provided and includes a processor coupled to a memory. The memory is configured to store a computer program, and the processor is configured to run the computer program, so that the electronic device performs the method in any one of the first aspect and the possible implementations of the first aspect.

With reference to the fourth aspect, in some implementations of the third aspect, the electronic device further includes one or both of the memory and a transceiver, and the transceiver is configured to receive a signal and/or send a signal.

According to a fifth aspect, a computer-readable storage medium is provided. The computer-readable storage medium includes a computer program or instructions. When the computer program or the instructions are run on a computer, the method according to any one of the first aspect and the possible implementations of the first aspect is performed.

According to a sixth aspect, a computer program product is provided. The computer program product includes a computer program or instructions. When the computer program or the instructions are run on a computer, the method according to any one of the first aspect and the possible implementations of the first aspect is performed.

According to a seventh aspect, a computer program is provided. When the computer program is run on a computer, the method according to any one of the first aspect or the possible implementations of the first aspect is performed.

**BRIEF DESCRIPTION OF DRAWINGS**

FIG. 1 is a schematic diagram of a structure of an electronic device according to an embodiment of this application;

FIG. 2 is a block diagram of a software structure of an electronic device according to an embodiment of this application;

FIG. 3 is a diagram of a system architecture to which a shading method according to an embodiment of this application is applicable;

FIG. 4 is a schematic flowchart of a shading method 400 according to an embodiment of this application;

FIG. 5 is a schematic flowchart of intercepting and caching a rendering instruction and rendering data according to an embodiment of this application;

FIG. 6 is a schematic flowchart of rendering main scene frequency domain information calculation according to an embodiment of this application;

FIG. 7 is a schematic flowchart of rendering main scene motion rate information calculation according to an embodiment of this application;

FIG. 8 is a schematic flowchart of UI shield region calculation according to an embodiment of this application;

FIG. 9 is a schematic flowchart of determining a shading rate of a region according to an embodiment of this application;

FIG. 10 is a schematic diagram of a first guide image according to an embodiment of this application;

FIG. 11 is a schematic diagram of a second guide image according to an embodiment of this application;

FIG. 12 is a schematic flowchart of variable rate shading according to an embodiment of this application;

FIG. 13 is a schematic diagram of a depth checkerboard according to an embodiment of this application;

FIG. 14A and FIG. 14B are a schematic flowchart of another shading method 1400 according to an embodiment of this application; and

FIG. 15 is a schematic flowchart of another shading method 1500 according to an embodiment of this application.

**DESCRIPTION OF EMBODIMENTS**

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using iOS®, Android®, Microsoft®, or another operating system. The portable electronic device may alternatively be another portable electronic device, like a laptop (Laptop). It should be further understood that, in some other embodiments, the foregoing electronic device may not be the portable electronic device but a desktop computer.

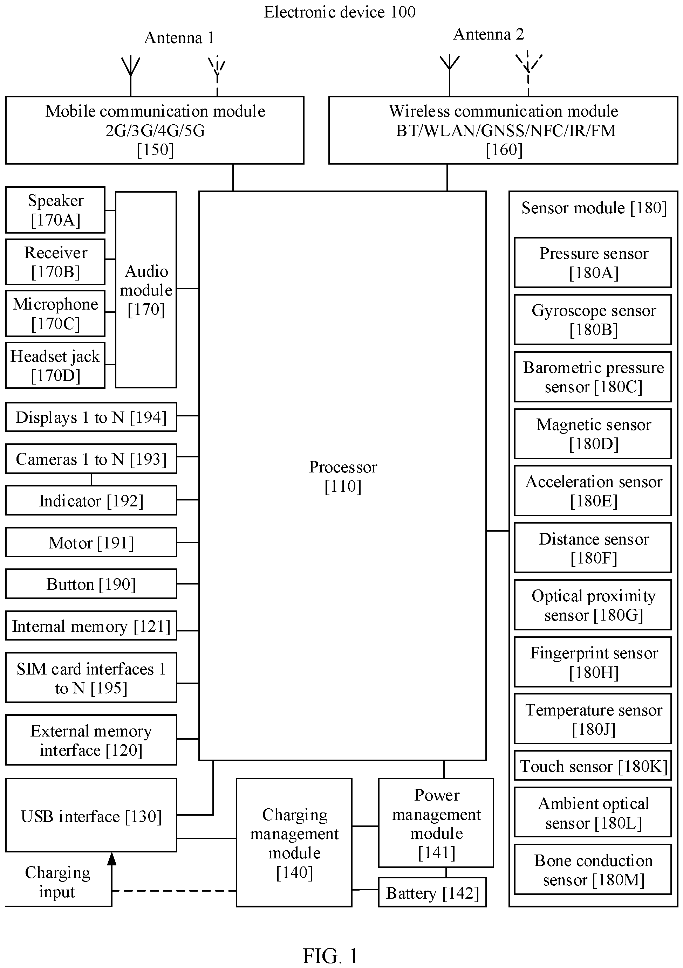

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transfer the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage region and a data storage region. The program storage region may store an operating system, an application required by at least one function (for example, a voice playing function or an image playing function), and the like. The data storage region may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, thereby implementing a directional recording function, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is greater than or equal to a first pressure threshold acts on an alarm clock application icon, an instruction for creating an alarm clock is executed.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. For example, when a mobile phone detects a touch operation of a user on a lock screen interface, the mobile phone may collect fingerprint information of the user through the fingerprint sensor 180H, and match the collected fingerprint information with fingerprint information preset in the mobile phone. If matching succeeds, the mobile phone may enter a non-lock screen interface from the lock screen interface.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided on the display 194. In some other embodiments, the touch sensor 180K may also be disposed on a surface of the electronic device 100 at a position different from that of the display 194.

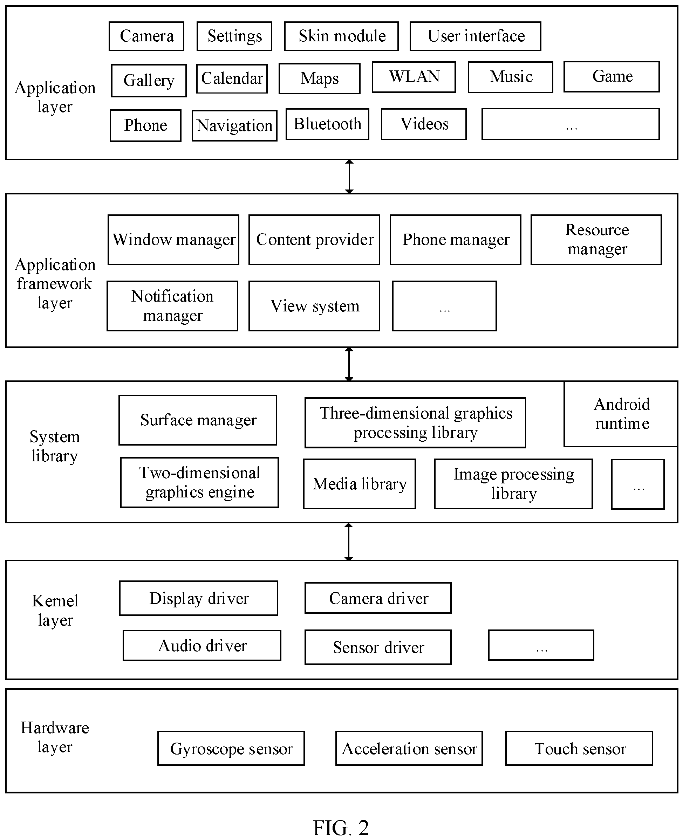

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application layer may include Camera, Settings, a skin module, a user interface (user interface, UI), a third-party application, and the like. The third-party application may include Gallery, Calendar, Phone, Maps, Navigation, WLAN, Bluetooth, Music, Videos, Messages, and the like.

The application framework layer provides an application programming interface (application programming interface, API) and a programming framework for an application in the application layer. The application framework layer may include some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes a visual control, like a control for displaying a text or a control for displaying a picture, for example, displaying indication information for prompting a virtual shutter button in this embodiment of this application. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification type message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In addition, the system library may further include a status monitoring service module, for example, a physical status identification module, configured to analyze and identify a user gesture; and a sensor service module, configured to monitor sensor data uploaded by various sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various types of sensors, for example, various types of sensors described in FIG. 1, and an acceleration sensor, a gyroscope sensor, a touch sensor, and the like in embodiments of this application.

With reference to the electronic device described in FIG. 1 and FIG. 2, in embodiments of this application, physical components related to the electronic device 100 mainly include hardware components such as a sensor, a decision support system (decision support system, DSS) display chip, a touch display, and a fingerprint recognition module; kernel software layers such as a screen management module, a display driver, a fingerprint driver, and an anti-accidental touch; application framework layer functions such as anti-accidental touch input, screen control, an always on display (always on display, AOD) service, and power management; and application layer services such as a special adaptation application (a camera), a third-party application, system hibernation, and AOD.

To avoid low accuracy due to a single identification manner of lower-rate shading regions in a variable rate shading method, embodiments of this application provide a shading method. In this method, a lower-rate shading region can be determined in a plurality of manners, and this greatly improves rendering performance. In addition, in the method, a specific shading manner can be adaptively adjusted according to an actual situation, and this improves shading efficiency while ensuring rendering performance. Second, the method can provide highly adaptive shading processing through implementation at a software layer without relying on improvement on a hardware device.

The following describes some terms in embodiments of this application, to facilitate understanding of a person skilled in the art.

Variable rate shading

Variable rate shading is a shading mechanism, and may allocate rendering performance or computing power at different image rendering rates. In some cases, a shading rate decreases slightly, but perceived output quality does not decrease. Therefore, rendering performance can be improved without additional consumption.

Variable rate shading may be performed at a coarser frequency than a pixel, that is, a group of pixels may be shaded as a unit, and results are copied to all samples of the group of pixels.

User interface

A user interface is related software designed for interaction and communication between a user and hardware, so that the user can conveniently and efficiently operate the hardware to implement interaction between the user and the hardware. The user interface is defined widely, and may include man-machine interaction and a graphical user interface. The user interface exists in all fields that participate in information exchange between humans and machines.

High-pass filtering

In an image in frequency domain, a lower frequency part is smoother because a grayscale value of the smoother part changes slightly; and a higher frequency part is usually an edge or noise because a grayscale value of the higher frequency part changes abruptly.

High-pass filtering is to retain the higher frequency part, namely, the protruding edge. Accordingly, low-pass filtering is to retain the lower frequency part, namely, the smoother image, weaken the edge, and eliminate the noise.

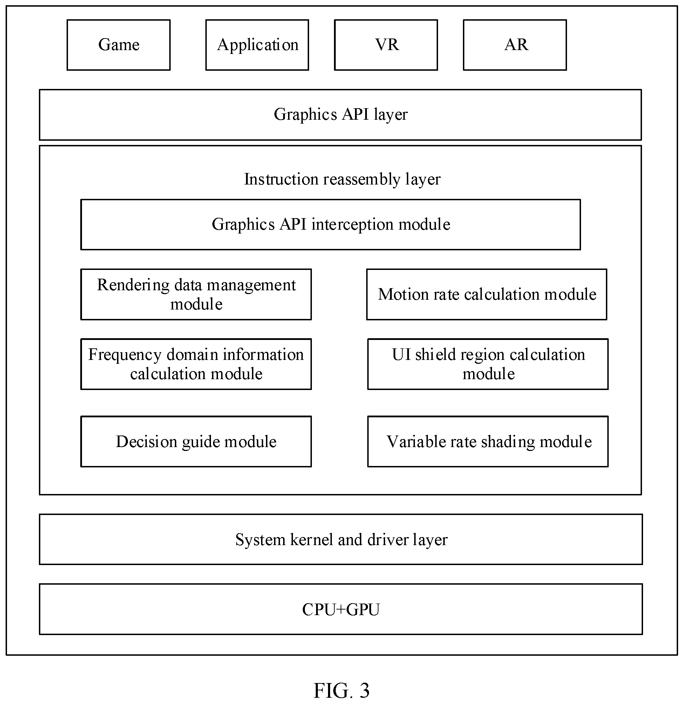

An application scenario of embodiments of this application may be a game application scenario of an electronic device. FIG. 3 is a diagram of a system architecture to which an embodiment of this application is applicable. For example, in an operating system framework, related modules include a system kernel and driver layer, an instruction reassembly layer, and a graphics application programming interface (Application Programming Interface, API) layer. For example, the graphics API layer may be OpenGL or Vulkan. The instruction reassembly layer includes a graphics API interception module, a rendering data management module, a frequency domain information calculation module, a motion rate calculation module, a user interface (User interface, UI) shield region calculation module, a decision guide module, and a variable rate shading module. The graphics API interception module is configured to intercept invoking of the graphics API layer, and may cache rendering information. The rendering information includes a rendering instruction and corresponding rendering data, and the electronic device may perform rendering processing on the rendering information. That is, the graphics API interception module intercepts a rendering instruction and corresponding rendering data, and performs collection and calculation on the intercepted corresponding rendering data, to obtain a specific series of rendering data. For example, the rendering data includes a main scene rendering texture, UI texture information, model view projection (model view projection, MVP) matrix information of a rendering object, and the like. The rendering data management module is configured to: analyze a rendering instruction, and obtain a main scene rendering texture, a UI rendering texture, camera view angle position information, and MVP matrix information of a rendering object. The rendering object may be understood as a specific rendering object. The frequency domain information calculation module is configured to calculate rendering main scene frequency domain information. The motion rate calculation module is configured to calculate a rendering main scene motion rate. The UI shield region calculation module is configured to calculate a UI shield region. The decision guide module is configured to determine a shading rate of an image region. The variable rate shading module is configured to supplement an unshaded region. A product form in this embodiment of this application may be included in the instruction reassembly layer in an operating system of the electronic device.

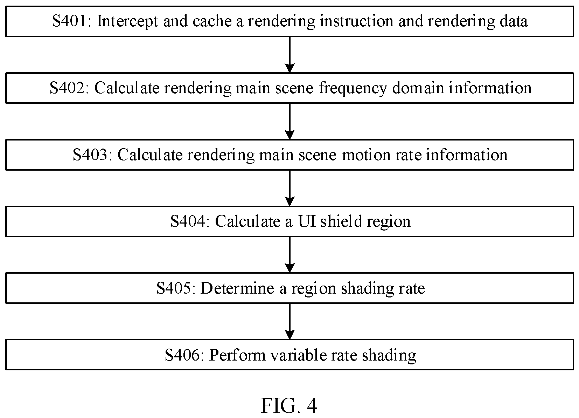

As shown in FIG. 4, a shading method 400 provided in an embodiment of this application mainly includes the following steps. The method may be applied to an electronic device.

S401: Intercept and cache a rendering instruction and rendering data.

It should be understood that a graphics API interception module of the electronic device intercepts and caches rendering information, and the rendering information includes the rendering instruction and the corresponding rendering data. The rendering information includes a main scene rendering texture, camera information, MVP matrix information of a rendering object, and a UI rendering texture in a rendering process. The rendering information is cached, so that different modules of the electronic device subsequently perform corresponding operations.

S402: Calculate rendering main scene frequency domain information.

It should be understood that, a frequency domain information calculation module of the electronic device performs tile processing on the main scene rendering texture in the rendering information, and tiles the main scene rendering texture into image regions including pixels of a specific size. A plurality of threads are allocated to each image region for calculation, and a color system (red green blue, RGB) value of each pixel is converted into a luminance value (grayscale value). The frequency domain information calculation module performs high-pass filtering in a horizontal direction and high-pass filtering in a vertical direction on pixels in each image region, to obtain a frequency domain information reference value of the image region.

S403: Calculate rendering main scene motion rate information.

It should be understood that a motion rate calculation module of the electronic device determines a motion rate of each pixel in each image region based on the camera information and the MVP matrix information of the rendering object in the rendering information, further determines a smallest motion rate value, and uses a reciprocal of the smallest value as a motion rate reference value. A final reference value is determined based on the frequency domain information reference value determined in the previous step S402 and the motion rate reference value determined in this step S403.

S404: Calculate a UI shield region.

It should be understood that a UI shield region calculation module of the electronic device determines, based on the UI rendering texture in the rendering information, whether each image region is the UI shield region.

S405: Determine a region shading rate.

It should be understood that a decision guide module of the electronic device determines an average luminance value based on the luminance value of each pixel in each image region determined in the step S402, and compares the average luminance value with the final reference value that is of each image region and that is determined in the step S403, to determine a first guide image. In addition, a final third guide image is determined with reference to the UI shield region (a second guide image) determined in the step S404.

S406: Perform variable rate shading.

It should be understood that a variable rate shading module of the electronic device performs shading processing on a higher-rate shading region in the third guide image, and classifies a lower-rate shading region in the third guide image into regions of different depths based on depth values. According to an early-z mechanism, shading processing is performed on a region whose depth is 1, and supplementing is performed on a region whose depth is 0 according to an interpolation calculation method. This completes shading processing of an entire image.

According to the shading method provided in embodiments of this application, shading rates of regions can be determined based on frequency domain information, motion rate information, luminance information, and UI shield region information. This can reduce unnecessary shading rates of some regions, reduce overheads in a shading process, and improve rendering performance.

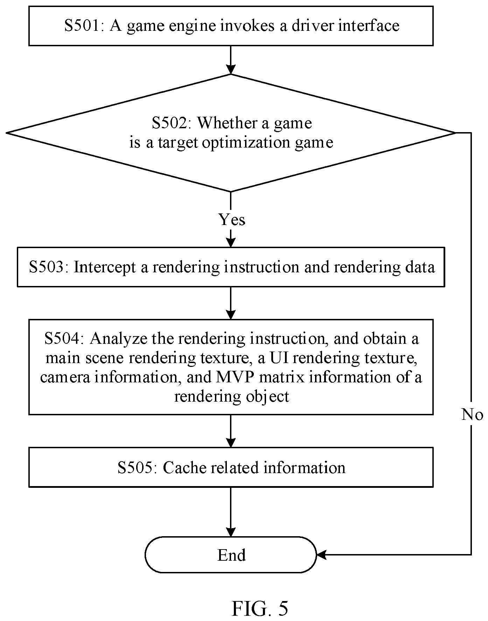

The following describes the shading method provided in embodiments of this application in detail. As shown in FIG. 5, specific content of the step S401 in the shading method 400 is described in detail. The following uses a game scenario as an example to describe the step S401 in detail. For example, a method 500 is implemented in an instruction reassembly layer.

S501: A game engine invokes a driver interface.

S502: Determine whether a game is a target optimization game.

S503: Intercept a rendering instruction and rendering data when the game is the target optimization game.

It should be understood that before an engine layer (for example, the graphics API layer shown in FIG. 3) of the electronic device invokes the rendering instruction of a driver layer (for example, the system kernel and driver layer shown in FIG. 3), a graphics API interception module intercepts the rendering instruction and the rendering data.

S504: Analyze the rendering instruction, and obtain a main scene rendering texture, a UI rendering texture, camera information, and MVP matrix information of a rendering object.

It should be understood that a rendering data management module processes the intercepted rendering instruction and rendering data. For example, the main scene rendering texture, the UI rendering texture, the camera information, and the MVP matrix information of the rendering object are obtained. The camera information may be camera view angle transform matrix information, and the MVP matrix information of the rendering object may be a transform matrix of the rendering object.

S505: Cache related information.

The rendering data management module caches the obtained specific rendering data for subsequent step execution.

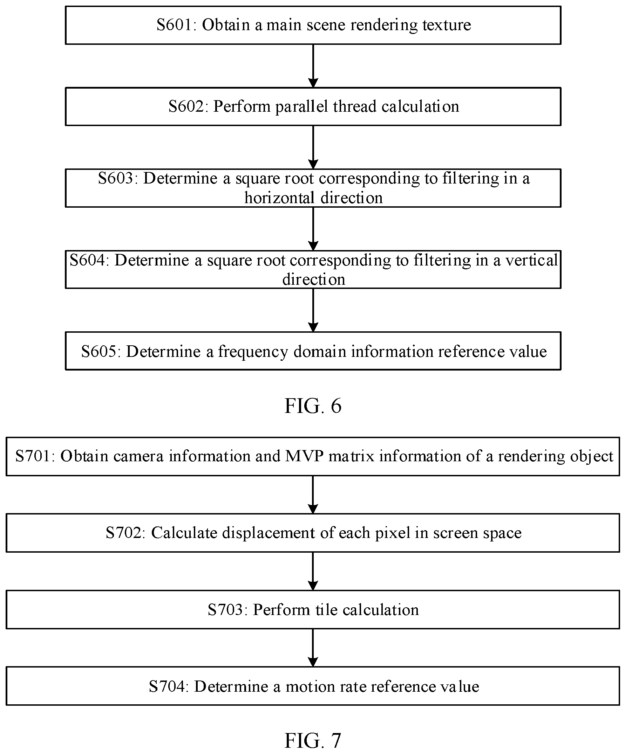

As shown in FIG. 6, specific content of the step S402 in the shading method 400 is described in detail. The following uses a game scenario as an example to describe the step S402 in detail. For example, a method 600 is performed by a frequency domain information calculation module.

S601: Obtain a main scene rendering texture.

S602: Perform parallel thread calculation.

It should be understood that the main scene rendering texture is obtained and tile processing is performed on the main scene rendering texture according to the method 500. For example, the main scene rendering texture is tiled based on a pixel size of $16 \times 16$ (256), and 32 threads are allocated to each image region for parallel calculation. Tile processing is performed on the main scene rendering texture and multi-thread parallel calculation is performed on each image region. This can accelerate an algorithm execution rate, and meet a real-time requirement of a user.

S603: Determine a square root corresponding to filtering in a horizontal direction.

S604: Determine a square root corresponding to filtering in a vertical direction.

It should be understood that frequency domain information in the horizontal direction and frequency domain information in the vertical direction of each image region may be obtained according to the following formulas:

$$f_h = \sqrt{\frac{1}{N^2} \sum_{x=1}^{N} \sum_{y=1}^{N} \left( \frac{I_{xy} - I_{(x-1)y}}{2} \right)^2}$$

$$f_v = \sqrt{\frac{1}{N^2} \sum_{x=1}^{N} \sum_{y=1}^{N} \left( \frac{I_{xy} - I_{x(y-1)}}{2} \right)^2}$$

$f_h$ represents a frequency domain information reference value in the horizontal direction; $f_v$ represents a frequency domain information reference value in the vertical direction; N represents a size of a tile in the horizontal direction or the vertical direction; x represents a coordinate in the horizontal direction; and y represents a coordinate in the vertical direction. $I_{xy}$ represents luminance of coordinates (x, y).

It should be understood that high-pass filtering is separately performed in the horizontal direction and the vertical direction according to the foregoing formulas. A square root of an average value of a sum of squares corresponding to pixels is calculated, and $f_h$ and $f_v$ may be obtained. Frequency domain information may be understood as a pixel change speed.

S605: Determine a frequency domain information reference value.

It should be understood that the frequency domain information reference value $f_h$ in the horizontal direction and the frequency domain information reference value $f_v$ in the vertical direction are obtained according to the foregoing formulas, and a greatest value ( $\max(f_h, f_v)$ ) is selected as the frequency domain information reference value of the image region.

Further, an RGB value of each pixel in each tiled image region is converted into a luminance value. A specific conversion formula is as follows:

$$I = 0.299R + 0.587G + 0.114B$$

It should be understood that the frequency domain information calculation module sends the obtained frequency domain information reference value and the luminance value to a decision guide module for subsequent processing of the decision guide module.

As shown in FIG. 7, specific content of the step S403 in the shading method 400 is described in detail. The following uses a game scenario as an example to describe the step S403 in detail. For example, a method 700 is performed by a motion rate calculation module.

S701: Obtain camera information and MVP matrix information of a rendering object.

S702: Calculate displacement of each pixel in screen space.

It should be understood that the camera information and the MVP matrix information of the rendering object are obtained according to the method 500. The two types of information include information of a previous frame and information of a current frame that are cached. The displacement of each pixel in the screen space is determined based on the two frames of camera information and MVP matrix information of the rendering object.

S703: Perform tile calculation.

It should be understood that displacement of each pixel in each image region obtained after an image is tiled according to a $16 \times 16$ size is calculated, and a smallest displacement value is selected from the displacement.

S704: Determine a motion rate reference value.

It should be understood that a reciprocal of the smallest displacement value is used as the motion rate

$$\frac{1}{v}$$

reference value ($v$). The motion rate reference value is multiplied by the frequency domain information reference value determined in the method 600, to obtain a final reference value ($\varepsilon(l)$).

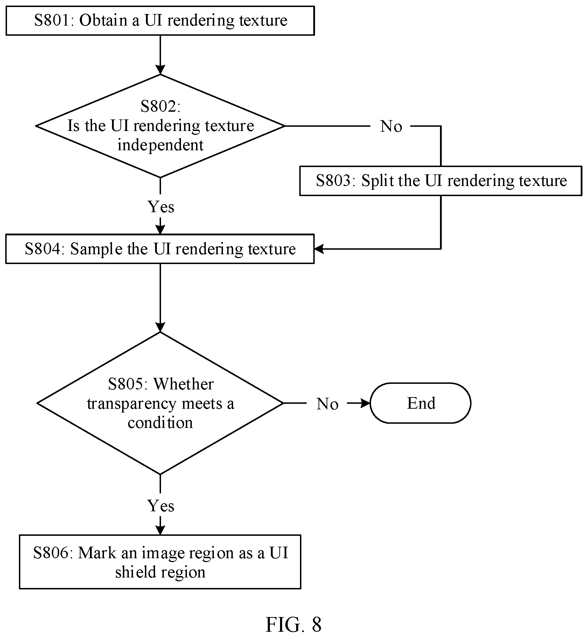

As shown in FIG. 8, specific content of the step S404 in the shading method 400 is described in detail. The following uses a game scenario as an example to describe the step S404 in detail. For example, a method 800 is performed by a UI shield region calculation module.

S801: Obtain a UI rendering texture.

S802: Determine whether the UI rendering texture is independent.

S803: Split the UI rendering texture when the UI rendering texture is not independent.

S804: Sample the UI rendering texture when the UI rendering texture is independent.

It should be understood that the UI rendering texture is obtained according to the method 500. When the UI rendering texture is a non-independent texture, the UI rendering texture needs to be split, to obtain an independent UI rendering texture.

S805: Determine whether transparency of the UI rendering texture meets a condition.

S806: Mark an image region as a UI shield region when the transparency of the UI rendering texture meets the condition.

For example, the transparency of the UI rendering texture may be determined based on blend. When alpha is greater than 0.2 and a sampled color is a non-initial color, the image region is marked as the UI shield region.

It should be understood that the UI shield region calculation module sends the marked UI shield region to a decision guide module for subsequent step execution.

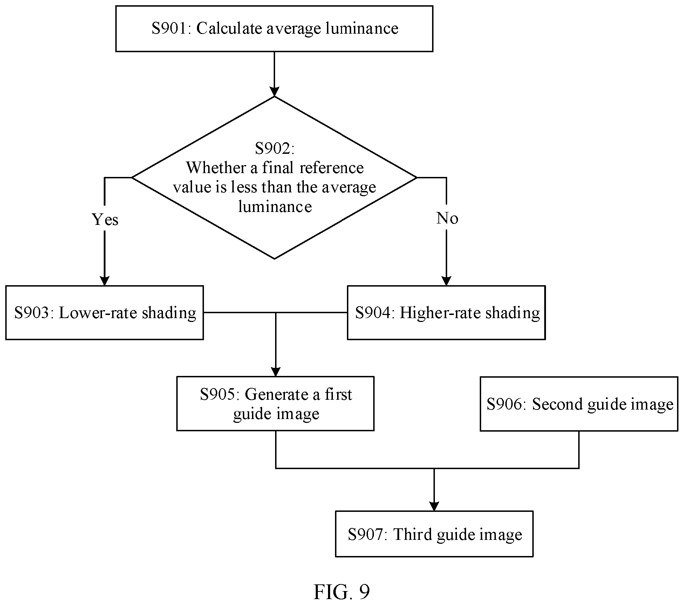

As shown in FIG. 9, specific content of the step S405 in the shading method 400 is described in detail. The following uses a game scenario as an example to describe the step S405 in detail. For example, a method 900 is performed by a decision guide module.

S901: Calculate average luminance.

S902: Determine whether a final reference value is less than the average luminance.

S903: Mark shading as lower-rate shading when the final reference value is less than the average luminance.

S904: Mark shading as higher-rate shading when the final reference value is greater than or equal to the average luminance.

S905: Generate a first guide image based on a marked lower-rate shading region and a marked higher-rate shading region.

It should be understood that the decision guide module obtains a luminance value of each pixel in each tiled image region, where the luminance value of each pixel in each tiled image region is obtained according to the method 600. The decision guide module further calculates the average luminance, for example, the average luminance of 256 pixels in one image region. The calculated average luminance is used as a threshold. A final reference value is obtained according to the method 700, and the final reference value is compared with the threshold. When the final reference value is less than the threshold, a region is marked as a lower-rate shading region in the first guide image; or when the final reference value is greater than or equal to the threshold, a region is marked as a higher-rate shading region in the first guide image. The first guide image is generated based on the higher-rate shading region of the first guide image and the lower-rate shading region of the first guide image.

S906: Obtain a second guide image from a UI shield region calculation module.

It should be understood that the second guide image is obtained by the UI shield region calculation module according to the method 800. Some or all of image regions in the second guide image are marked as UI shield regions.

S907: Generate a third guide image based on the first guide image and the second guide image.

It should be understood that a guide image is formed by a lower-rate shading region and a higher-rate shading region. The decision guide module generates a final guide image (the third guide image) based on the foregoing two guide images (the first guide image and the second guide image), and the final guide image may be used to guide a variable rate shading module to perform shading.

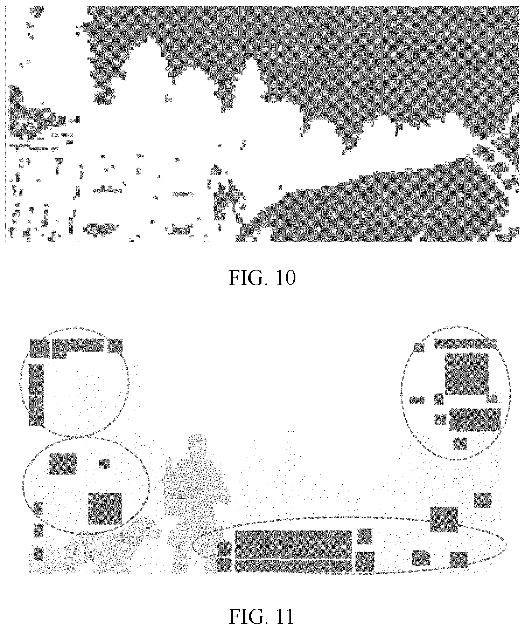

For ease of understanding, FIG. 10 is a schematic diagram of a first guide image determined based on frequency domain information and a motion rate. It can be seen from FIG. 10 that a gray region is a region in which frequency domain information is a lower frequency and a motion rate is higher. In the gray region, a difference between pixels is small, and transition is smoother. FIG. 11 is a schematic diagram of a second guide image with UI shield regions. A gray region is a UI shield region.

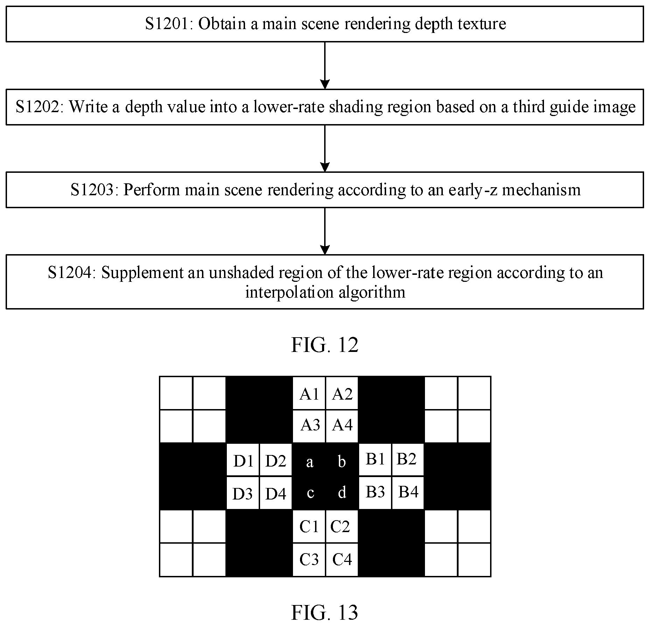

As shown in FIG. 12, specific content of the step S406 in the shading method 400 is described in detail. The following uses a game scenario as an example to describe the step S406 in detail. For example, a method 1200 is performed by a variable rate shading module.

S1201: Obtain a main scene rendering depth texture.

It should be understood that the main scene rendering depth texture is a type of a main scene rendering texture, and may be obtained according to the method 500.

S1202: Write a depth value into a lower-rate shading region based on a third guide image.

S1203: Perform main scene rendering according to an early-z mechanism.

S1204: Supplement an unshaded region of the lower-rate region according to an interpolation algorithm.

It should be understood that, in the third guide image, a black (or gray) region may be considered as a region shaded at a lower rate, and a white region may be considered as a region shaded at a higher rate. The variable rate shading module draws a depth checkerboard in the lower-rate shading region in a unit of Quad.

For ease of understanding, FIG. 13 shows a depth checkerboard drawn in a unit of one Quad. It can be seen from FIG. 13 that one Quad includes four pixels, a black region represents that a depth value is 0, and a white region represents that a depth value is 1. 0 represents a nearest depth, and 1 represents a farthest depth. For example, A1, A2, A3, and A4 in the figure represent color values of four pixels in one Quad. In depth regions with the value 0, namely, black regions, the black regions are not shaded according to an early-z mechanism. This reduces specific shading overheads. After main scene rendering is completed, for the black lower-rate shading region in the figure, the unshaded black region is supplemented according to an interpolation algorithm.

It should be understood that the interpolation algorithms are shown as follows:

$$a = (A1 + D1) / 2$$

$$b = (A2 + D2) / 2$$

$$c = (A3 + D3) / 2$$

$$d = (A4 + D4) / 2$$

In the foregoing formulas, $a$, $b$, $c$, $d$ and $A1$, $A2$, $A3$, $A4$, $D1$, $D2$, $D3$, $D4$ respectively represent color values of corresponding pixels. The region is supplemented according to the interpolation algorithm, that is, a color value of the corresponding region is supplemented.

According to the shading method provided in embodiments of this application, the electronic device processes the frequency domain information, the motion rate information, the luminance information, and the UI shield region information of the rendering image in the foregoing steps. This can adaptively identify or mark unnecessary shading rates of some regions, and reduce the shading rate of the region. The method can effectively reduce shading overheads and improve rendering performance. Further, in the method, the average luminance value is used as the threshold, and the threshold may vary with different scenarios. Therefore, the method can adapt to different rendering scenarios, and improve universality and flexibility of the shading method.

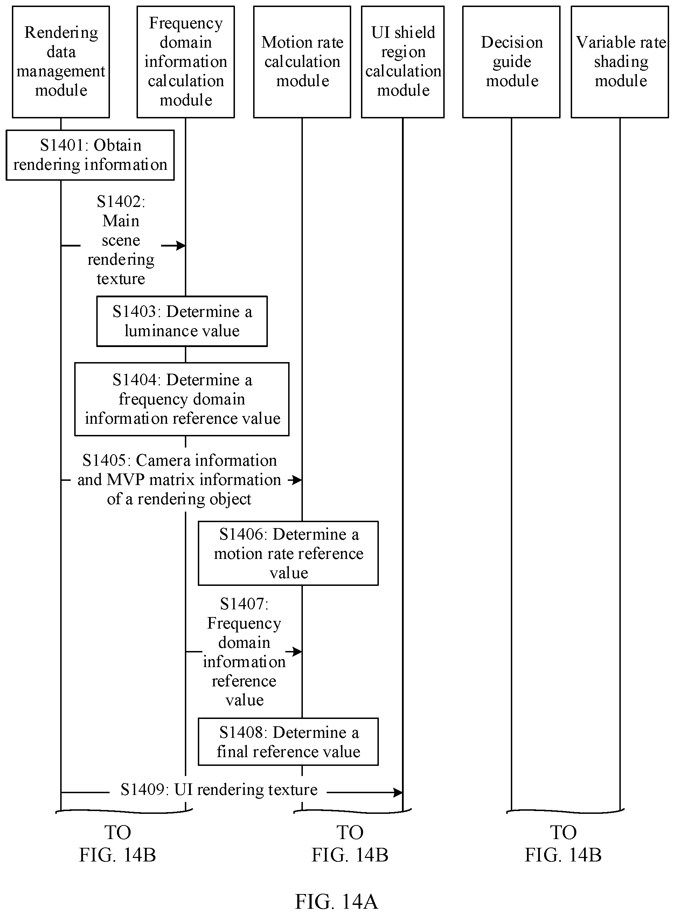

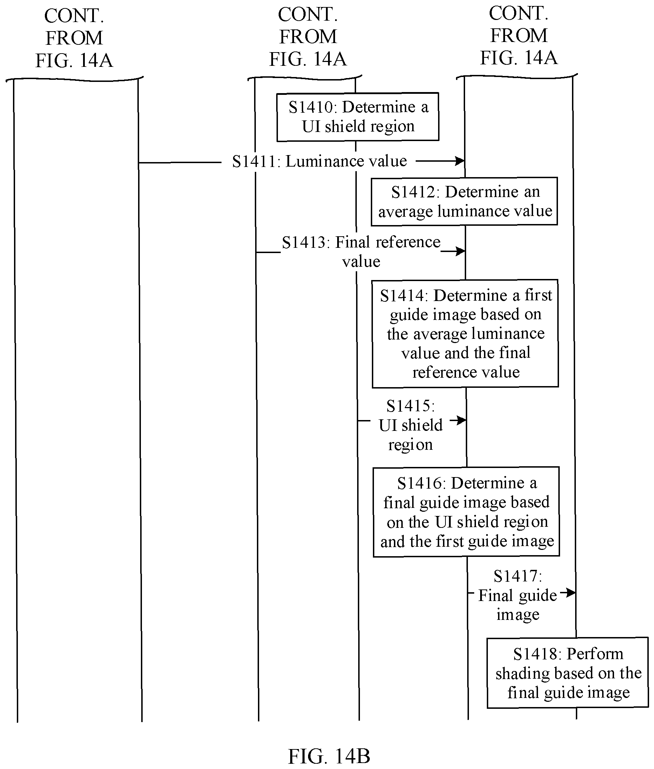

FIG. 14A and FIG. 14B are a schematic flowchart of a shading method 1400 according to an embodiment of this application. An electronic device includes a rendering data management module, a frequency domain information calculation module, a motion rate calculation module, a UI shield region calculation module, a decision guide module, and a variable rate shading module shown in FIG. 14A and FIG. 14B. The following describes specific steps performed by modules of the electronic device in the shading method provided in this embodiment of this application.

S1401: The rendering data management module obtains rendering information.

The rendering data management module may obtain rendering information of a previous frame and rendering information of a current frame. For example, the rendering information includes but is not limited to a main scene rendering texture, camera information, MVP matrix information of a rendering object, and a UI rendering texture. The rendering data management module caches the rendering information for corresponding modules to perform operations in subsequent steps.

S1402: The rendering data management module sends the main scene rendering texture, and correspondingly, the frequency domain information calculation module receives the main scene rendering texture.

The rendering data management module sends the main scene rendering texture in the rendering information to the frequency domain information calculation module.

S1403: The frequency domain information calculation module determines a luminance value.

An RBG value of each pixel is converted into a luminance value for subsequent determination of a first guide image.

S1404: The frequency domain information calculation module determines a frequency domain information reference value.

High-pass filtering is performed in a horizontal direction and a vertical direction of a pixel to obtain frequency domain information in the horizontal direction and frequency domain information in the vertical direction, and a greatest value is selected from the frequency domain information in the horizontal direction and the frequency domain information in the vertical direction as the frequency domain information reference value of the pixel. For detailed content, refer to the foregoing steps S603 to S605.

S1405: The rendering data management module sends the camera information and the MVP matrix information of the rendering object, and correspondingly, the motion rate calculation module receives the camera information and the MVP matrix information of the rendering object.

The rendering data management module sends the camera information and the MVP matrix information of the rendering obj ect to the motion rate calculation module, so that the motion rate calculation module determines a motion rate reference value.

S1406: The motion rate calculation module determines the motion rate reference value.

Displacement of each pixel in each image region is calculated, a smallest value is selected, and a reciprocal of the smallest value is used as the motion rate reference value.

S1407: The frequency domain information calculation module sends the frequency domain information reference value, and correspondingly, the motion rate calculation module receives the frequency domain information reference value.

The frequency domain information calculation module sends the frequency domain information reference value to the motion rate calculation module, so that the motion rate calculation module determines a final reference value.

S1408: The motion rate calculation module determines the final reference value.

The motion rate module multiplies the motion rate reference value by the frequency domain information reference value to obtain the final reference value.

S1409: The rendering data management module sends the UI rendering texture, and correspondingly, the UI shield region calculation module receives the UI rendering texture.

The rendering data management module sends the UI rendering texture in the rendering information to the UI shield region calculation module, so that the UI shield region calculation module determines a UI shield region.

S1410: The UI shield region calculation module determines the UI shield region.

For specific content, refer to the foregoing method 800. The UI shield region calculation module determines a second guide image, and the second guide image includes the UI shield region.

S1411: The frequency domain information calculation module sends the luminance value, and correspondingly, the decision guide module receives the luminance value.

The frequency domain information calculation module sends the calculated luminance value of each pixel in each image region to the decision guide module, so that the decision guide module determines a threshold.

S1412: The decision guide module determines an average luminance threshold.

The decision guide module calculates the average luminance value, and uses the average luminance value as the threshold.

S1413: The motion rate module sends the final reference value, and correspondingly, the decision guide module receives the final reference value.

The motion rate module sends the final reference value to the decision guide module.

S1414: The decision guide module determines the first guide image based on the average luminance value and the final reference value.

The decision guide module determines the first guide image based on the determined average luminance value and the received final reference value, where the first guide image includes a higher-rate shading region of the first guide image and a lower-rate shading region of the first guide image.

S1415: The UI shield region calculation module sends the UI shield region, and correspondingly, the decision guide module receives the UI shield region.

The UI shield region calculation module sends the UI shield region to the decision guide module, so that the decision guide module determines a final guide image.

S1416: The decision guide module determines the final guide image based on the UI shield region and the first guide image.

The decision guide module determines the final guide image with reference to the received UI shield region (a second guide image) and the determined first guide image.

S1417: The decision guide module sends the final guide image, and correspondingly, the variable rate shading module receives the final guide image.

The decision guide module sends the final guide image to the variable rate shading module for the variable rate shading module to perform shading.

S1418: The variable rate shading module performs shading based on the final guide image.

The final guide image includes a higher-rate shading region and a lower-rate shading region. The variable rate shading module shades the higher-rate shading region, and writes a depth value into the lower-rate shading region. Further, the variable rate shading module shades a region marked 1 in the lower-rate shading region, and supplements a region marked 0 in the lower-rate shading region according to an interpolation algorithm. For specific content, refer to the foregoing method 1200.

According to the shading method provided in this embodiment of this application, the electronic device can adaptively identify and mark the higher-rate shading region and the lower-rate shading region with reference to the frequency domain information, the motion rate information, the luminance information, and the UI shield region information. For a region on which higher-rate shading is not required, a shading rate can be appropriately adjusted. This reduces shading overheads, and improves rendering performance. In the method, luminance information is used as an adaptive threshold, and this can adaptively render different scenarios.

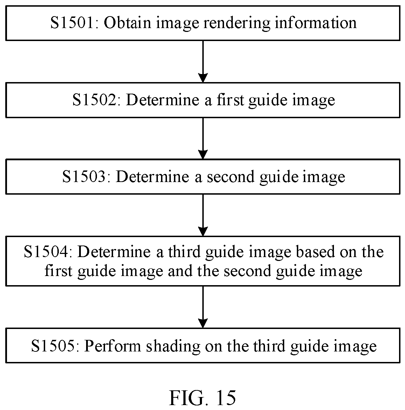

FIG. 15 is a schematic flowchart of a shading method 1500 according to an embodiment of this application. The method may be applied to the system architecture shown in FIG. 3. The following describes the method 1500 in detail.

S1501: Obtain image rendering information.

It should be understood that the image rendering information includes a main scene rendering texture, camera information, MVP matrix information of a rendering object, and a UI rendering texture. An image includes N image regions, and each of the N image regions includes M pixels, where N is an integer greater than or equal to 1, and M is an integer greater than or equal to 1. For example, one image may be tiled into a plurality of regions, each region has a pixel of a specific size, and M is 256 (16× 16). An electronic device may allocate 32 threads to each tile for parallel calculation, to accelerate an algorithm execution rate.

S1502: Determine a first guide image.

It should be understood that the first guide image is determined based on the main scene rendering texture, the camera information, and the MVP matrix information of the rendering object.

Specifically, the determining the first guide image based on the main scene rendering texture, the camera information, and the MVP matrix information of the rendering object includes: determining a first reference value based on a main scene rendering texture of a first image region, where the N image regions include the first image region; determining a second reference value based on camera information of the first image region and MVP matrix information of a rendering object in the first image region; determining a third reference value based on the first reference value and the second reference value; and determining the first guide image based on the third reference value and a first threshold, where the first threshold is determined based on luminance values of M pixels in the first image region.

It should be understood that the first reference value is a frequency domain information reference value, the second reference value is a motion rate information reference value, and the first threshold is an average value of the luminance values of the M pixels. A final reference value (the third reference value) is determined based on the frequency domain information reference value and the motion rate information reference value.

Different pixels in a region (the first image region) of the image may have different frequency domain information, but a frequency domain information reference value of the region is specific, a motion rate reference value of the region is specific, and a first threshold of the region is also specific. The frequency domain information reference value, the motion rate information reference value, and the first threshold of each region may be determined for the region of the image (each image region). Different image regions may have same or different reference values or thresholds.

Specifically, the determining the first guide image based on the third reference value and a first threshold includes: when the third reference value is greater than or equal to the first threshold, determining that the first image region is a higher-rate shading region of the first guide image; or when the third reference value is less than the first threshold, determining that the first image region is a lower-rate shading region of the first guide image.

It should be understood that different image regions may have different reference values and first thresholds. Therefore, different image regions may be classified into higher-rate shading regions or lower-rate shading regions.

Specifically, the determining a first reference value based on a main scene rendering texture of a first image region includes: determining frequency domain information in a horizontal direction and frequency domain information in a vertical direction based on the main scene rendering texture of the first image region; and determining the first reference value based on the frequency domain information in the horizontal direction and the frequency domain information in the vertical direction.

It should be understood that high-pass filtering is performed on each image region of the image. Through high-pass filtering in the horizontal direction, a square root of an average value of a sum of squares of frequency domain information, in the horizontal direction, of all pixels in the image region is calculated to obtain the frequency domain information in the horizontal direction. Through high-pass filtering in the vertical direction, a square root of an average value of a sum of squares of frequency domain information, in the vertical direction, of all pixels in the image region is calculated to obtain the frequency domain information in the vertical direction. A greatest value of the obtained frequency domain information in the horizontal direction and the obtained frequency domain information in the vertical direction is used as a frequency domain information reference value (the first reference value) of the image region.

Specifically, the determining a second reference value based on camera information of the first image region and MVP matrix information of a rendering object in the first image region includes: determining motion rate information based on the camera information of the first image region and the MVP matrix information of the rendering object in the first image region; and

determining the second reference value based on the motion rate information.

It should be understood that displacement (motion rate information) of each pixel in an image region of the image is calculated, and a reciprocal of a smallest displacement value is used as a motion rate reference value.

S1503: Determine a second guide image.

It should be understood that the second guide image is determined based on the UI rendering texture.

Specifically, the determining the second guide image based on the UI rendering texture includes: determining a fourth reference values based on a UI rendering texture of the first image region; and when the fourth reference value is greater than a second threshold, marking the first image region as a UI shield region of the second guide image.

It should be understood that, when the UI rendering texture is an independent texture, transparency of the UI rendering texture of a specific image region is determined based on blend. When alpha is greater than 0.2 and a sampled color is a non-initial color, the image region is marked as the UI shield region. Alternatively, when the UI rendering texture is a non-independent texture, the UI rendering texture needs to be split into an independent texture first.

S1504: Determine a third guide image based on the first guide image and the second guide image.

It should be understood that the third guide image includes a lower-rate shading region of the third guide image or a higher-rate shading region of the third guide image.

S1505: Perform shading on the third guide image.

Specifically, the shading the third guide image includes: shading the higher-rate shading region of the third guide image; and supplementing the lower-rate shading region of the third guide image according to an interpolation algorithm.

Specifically, the supplementing the lower-rate shading region of the third guide image according to an interpolation algorithm includes: generating a depth checkerboard in the lower-rate shading region of the third guide image, where the depth checkerboard includes a first region or a second region, and a depth of the first region is different from a depth of the second region; shading the first region; and supplementing the second region according to the interpolation algorithm.

It should be understood that a depth value of the first region of the depth checkerboard is 1, and a depth value of the second region of the depth checkerboard is 0. The electronic device may not perform shading processing on the second region according to an early-z mechanism, but perform supplementing according to the interpolation algorithm. Supplementing may be understood as calculating a color value of each pixel in the region.

According to the shading method provided in this embodiment of this application, the electronic device can adaptively identify and mark the higher-rate shading region and the lower-rate shading region with reference to the frequency domain information, the motion rate information, the luminance information, and the UI shield region information. This can obtain a more accurate guide image, and perform more accurate shading processing. For a region on which higher-rate shading is not required, a shading rate can be appropriately adjusted in the method. This reduces shading overheads, and improves rendering performance. In addition, in the method, luminance information is used as an adaptive threshold, and this can adaptively render different scenarios.

An embodiment of this application provides a computer program product. When the computer program product runs on a first electronic device, the first electronic device is enabled to perform the technical solutions in the foregoing embodiments. An implementation principle and technical effect thereof are similar to those of the foregoing method-related embodiment. Details are not described herein again.

An embodiment of this application provides a readable storage medium. The readable storage medium includes instructions. When the instructions are run on a first electronic device, the first electronic device is enabled to perform the technical solutions in the foregoing embodiments. An implementation principle and technical effect thereof are similar. Details are not described herein again.

An embodiment of this application provides a chip. The chip is configured to execute instructions. When the chip runs, the technical solutions in the foregoing embodiments are performed. An implementation principle and technical effect thereof are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A shading method, comprising:

obtaining rendering information of an image, wherein the rendering information comprises a main scene rendering texture, camera information, model view projection MVP matrix information of a rendering object, and a user interface UI rendering texture, the image comprises N image regions, each of the N image regions comprises M pixels, N is a positive integer greater than or equal to 1, and M is a positive integer greater than or equal to 1;

determining a first guide image based on the main scene rendering texture, the camera information, and the MVP matrix information of the rendering object;

determining a second guide image based on the UI rendering texture;

determining a third guide image based on the first guide image and the second guide image, wherein the third guide image comprises a lower-rate shading region of the third guide image or a higher-rate shading region of the third guide image; and

shading the third guide image.

2. The method according to claim 1, wherein the shading the third guide image comprises:

shading the higher-rate shading region of the third guide image; and

supplementing the lower-rate shading region of the third guide image according to an interpolation algorithm.

3. The method according to claim 2, wherein the supplementing the lower-rate shading region of the third guide image according to an interpolation algorithm comprises:

generating a depth checkerboard in the lower-rate region of the third guide image, wherein the depth checkerboard comprises a first region or a second region, and a depth of the first region is different from a depth of the second region;

shading the first region; and

supplementing the second region according to the interpolation algorithm.

4. The method according to any one of claims 1 to 3, wherein the determining a first guide image based on the main scene rendering texture, the camera information, and the MVP matrix information of the rendering object comprises:

determining a first reference value based on a main scene rendering texture of a first image region, wherein the N image regions comprise the first image region;

determining a second reference value based on camera information of the first image region and MVP matrix information of a rendering object in the first image region;

determining a third reference value based on the first reference value and the second reference value; and

determining the first guide image based on the third reference value and a first threshold, wherein the first threshold is determined based on luminance values of M pixels in the first image region.

5. The method according to claim 4, wherein the determining the first guide image based on the third reference value and a first threshold comprises:

when the third reference value is greater than or equal to the first threshold, determining that the first image region is a higher-rate shading region of the first guide image; or

when the third reference value is less than the first threshold, determining that the first image region is a lower-rate shading region of the first guide image.

6. The method according to claim 4 or 5, wherein the determining a first reference value based on a main scene rendering texture of a first image region comprises:

determining frequency domain information in a horizontal direction and frequency domain information in a vertical direction based on the main scene rendering texture of the first image region; and

determining the first reference value based on the frequency domain information in the horizontal direction and the frequency domain information in the vertical direction.

7. The method according to any one of claims 4 to 6, wherein the determining a second reference value based on camera information of the first image region and MVP matrix information of a rendering object in the first image region comprises:

determining motion rate information based on the camera information of the first image region and the MVP matrix information of the rendering object in the first image region; and

determining the second reference value based on the motion rate information.

8. The method according to any one of claims 1 to 7, wherein the determining a second guide image based on the UI rendering texture comprises:

determining a plurality of fourth reference values based on a UI rendering texture of the first image region; and

when the fourth reference value is greater than a second threshold, marking the first image region as a UI shield region of the second guide image.

9. A shading apparatus, comprising:

an interception module, configured to obtain rendering information of an image, wherein the rendering information comprises a main scene rendering texture, camera information, model view projection MVP matrix information of a rendering object, and a user interface UI rendering texture, the image comprises N image regions, each of the N image regions comprises M pixels, N is a positive integer greater than or equal to 1, and M is a positive integer greater than or equal to 1;

a first calculation module, configured to determine a first guide image based on the main scene rendering texture, the camera information, and the MVP matrix information of the rendering obj ect;

a second calculation module, configured to determine a second guide image based on the UI rendering texture;

a decision guide module, configured to determine a third guide image based on the first guide image and the second guide image, wherein the third guide image comprises a lower-rate shading region of the third guide image or a higher-rate shading region of the third guide image; and

a variable rate shading module, configured to shade the third guide image.

10. The apparatus according to claim 9, wherein the variable rate shading module is specifically configured to shade the higher-rate shading region of the third guide image; and

the variable rate shading module is further configured to supplement the lower-rate shading region of the third guide image according to an interpolation algorithm.

11. The apparatus according to claim 10, wherein the variable rate shading module is specifically configured to generate a depth checkerboard in the lower-rate region of the third guide image, wherein the depth checkerboard comprises a first region or a second region, and a depth of the first region is different from a depth of the second region;

the variable rate shading module is further configured to shade the first region; and

the variable rate shading module is further configured to supplement the second region according to the interpolation algorithm.

12. The apparatus according to any one of claims 9 to 11, wherein the first calculation module is specifically configured to determine a first reference value based on a main scene rendering texture of a first image region, wherein the N image regions comprise the first image region;

the first calculation module is further configured to determine a second reference value based on camera information of the first image region and MVP matrix information of a rendering object in the first image region;

the first calculation module is further configured to determine a third reference value based on the first reference value and the second reference value; and

the decision guide module is specifically configured to determine the first guide image based on the third reference value and a first threshold, wherein the first threshold is determined based on luminance values of M pixels in the first image region.

13. The apparatus according to claim 12, wherein the decision guide module is specifically configured to: when the third reference value is greater than or equal to the first threshold, determine that the first image region is a higher-rate shading region of the first guide image; or

the decision guide module is specifically configured to: when the third reference value is less than the first threshold, determine that the first image region is a lower-rate shading region of the first guide image.

14. The apparatus according to claim 12 or 13, wherein the first calculation module is specifically configured to determine frequency domain information in a horizontal direction and frequency domain information in a vertical direction based on the main scene rendering texture of the first image region; and

the first calculation module is further configured to determine the first reference value based on the frequency domain information in the horizontal direction and the frequency domain information in the vertical direction.

15. The apparatus according to any one of claims 12 to 14, wherein the first calculation module is specifically configured to determine motion rate information based on the camera information of the first image region and the MVP matrix information of the rendering object in the first image region; and

the first calculation module is further configured to determine the second reference value based on the motion rate information.

16. The apparatus according to any one of claims 9 to 15, wherein the second calculation module is specifically configured to determine a fourth reference value based on a UI rendering texture of the first image region; and

the second calculation module is further configured to: when the fourth reference value is greater than a second threshold, mark the first image region as a UI shield region of the second guide image.

17. An electronic device, comprising a processor coupled to a memory, wherein the memory is configured to store a computer program, and the processor is configured to run the computer program, so that the electronic device performs the method according to any one of claims 1 to 8.

18. The electronic device according to claim 17, wherein the electronic device further comprises one or both of the memory and a transceiver, and the transceiver is configured to receive a signal and/or send a signal.

19. A computer-readable storage medium, wherein the computer-readable storage medium comprises a computer program or instructions; and when the computer program or the instructions are run on a computer, the method according to any one of claims 1 to 8 is performed.

20. A computer program product, wherein the computer program product comprises a computer program or instructions; and when the computer program or the instructions are run on a computer, the method according to any one of claims 1 to 8 is performed.

Electronic device 100

Antenna 1

Antenna 2

| Mobile communication module 2G/3G/4G/5G [150] | Wireless communication module BT/WLAN/GNSS/NFC/IR/FM [160] |

| Speaker [170A] | | | Sensor module [180] |
| Receiver [170B] | Audio module [170] | | Pressure sensor [180A] |
| Microphone [170C] | | | Gyroscope sensor [180B] |
| Headset jack [170D] | | | Barometric pressure sensor [180C] |

Processor [110]

| Displays 1 to N [194] | | Magnetic sensor [180D] |
| Cameras 1 to N [193] | | Acceleration sensor [180E] |
| Indicator [192] | | Distance sensor [180F] |
| Motor [191] | | Optical proximity sensor [180G] |
| Button [190] | | Fingerprint sensor [180H] |
| Internal memory [121] | | Temperature sensor [180J] |
| SIM card interfaces 1 to N [195] | | Touch sensor [180K] |
| External memory interface [120] | | Ambient optical sensor [180L] |

| USB interface [130] | Charging management module [140] | Power management module [141] | Bone conduction sensor [180M] |

Charging input

Battery [142]

FIG. 1

| Application layer | Camera | Settings | Skin module | User interface | | |
|---|---|---|---|---|---|---|
| | Gallery | Calendar | Maps | WLAN | Music | Game |
| | Phone | Navigation | Bluetooth | Videos | ... | |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | Image processing library | ... |

| Kernel layer | Display driver | Camera driver | |
|---|---|---|---|
| | Audio driver | Sensor driver | ... |

| Hardware layer | Gyroscope sensor | Acceleration sensor | Touch sensor |
|---|---|---|---|

FIG. 2

| Game | Application | VR | AR |
|---|---|---|---|

**Graphics API layer**

**Instruction reassembly layer**

Graphics API interception module

| Rendering data management module | Motion rate calculation module |
|---|---|
| Frequency domain information calculation module | UI shield region calculation module |
| Decision guide module | Variable rate shading module |

System kernel and driver layer

CPU+GPU

FIG. 3

S401: Intercept and cache a rendering instruction and rendering data

S402: Calculate rendering main scene frequency domain information

S403: Calculate rendering main scene motion rate information

S404: Calculate a UI shield region

S405: Determine a region shading rate

S406: Perform variable rate shading

FIG. 4

S501: A game engine invokes a driver interface

S502: Whether a game
is a target optimization game

Yes

S503: Intercept a rendering instruction and rendering data

S504: Analyze the rendering instruction, and obtain a
main scene rendering texture, a UI rendering texture,
camera information, and MVP matrix information of a
rendering object

S505: Cache related information

No

End

FIG. 5

S601: Obtain a main scene rendering texture

S602: Perform parallel thread calculation

S603: Determine a square root corresponding to filtering in a horizontal direction

S604: Determine a square root corresponding to filtering in a vertical direction

S605: Determine a frequency domain information reference value

FIG. 6

S701: Obtain camera information and MVP matrix information of a rendering object

S702: Calculate displacement of each pixel in screen space

S703: Perform tile calculation

S704: Determine a motion rate reference value

FIG. 7

S801: Obtain a UI rendering texture

S802:
Is the UI rendering texture
independent — No — S803: Split the UI rendering texture

Yes

S804: Sample the UI rendering texture

S805: Whether
transparency meets a
condition — No → End

Yes

S806: Mark an image region as a UI
shield region

FIG. 8

S901: Calculate average luminance

S902:
Whether a final reference value is less than the average luminance

Yes

No

S903: Lower-rate shading

S904: Higher-rate shading

S905: Generate a first guide image

S906: Second guide image

S907: Third guide image

FIG. 9

FIG. 10

FIG. 11

S1201: Obtain a main scene rendering depth texture

S1202: Write a depth value into a lower-rate shading region based on a third guide image

S1203: Perform main scene rendering according to an early-z mechanism

S1204: Supplement an unshaded region of the lower-rate region according to an interpolation algorithm

FIG. 12

| | | | A1 | A2 | | | |
| | | | A3 | A4 | | | |
| | D1 | D2 | a | b | B1 | B2 | |
| | D3 | D4 | c | d | B3 | B4 | |
| | | | C1 | C2 | | | |
| | | | C3 | C4 | | | |

FIG. 13

| Rendering data management module | Frequency domain information calculation module | Motion rate calculation module | UI shield region calculation module | Decision guide module | Variable rate shading module |
|---|---|---|---|---|---|

S1401: Obtain rendering information

S1402: Main scene rendering texture

S1403: Determine a luminance value

S1404: Determine a frequency domain information reference value

S1405: Camera information and MVP matrix information of a rendering object

S1406: Determine a motion rate reference value

S1407: Frequency domain information reference value

S1408: Determine a final reference value

S1409: UI rendering texture

TO FIG. 14B

TO FIG. 14B

TO FIG. 14B

FIG. 14A

CONT.
FROM
FIG. 14A

CONT.
FROM
FIG. 14A

CONT.
FROM
FIG. 14A

S1410: Determine a
UI shield region

S1411: Luminance value ⟶

S1412: Determine an
average luminance value

S1413: Final reference
value ⟶

S1414: Determine a first
guide image based on
the average luminance
value and the final
reference value

S1415:
UI shield ➔
region

S1416: Determine a
final guide image based
on the UI shield region
and the first guide image

S1417:
Final guide ➔
image

S1418: Perform
shading based on the
final guide image

FIG. 14B

S1501: Obtain image rendering information

↓

S1502: Determine a first guide image

↓

S1503: Determine a second guide image

↓

S1504: Determine a third guide image based on the first guide image and the second guide image

↓

S1505: Perform shading on the third guide image

FIG. 15

## INTERNATIONAL SEARCH REPORT

| International application No. |
|---|
| **PCT/CN2023/103742** |

**A. CLASSIFICATION OF SUBJECT MATTER**

G06T15/00(2011.01)i; G06T15/80(2011.01)i; H04N5/14(2006.01)i

According to International Patent Classification (IPC) or to both national classification and IPC

**B. FIELDS SEARCHED**

Minimum documentation searched (classification system followed by classification symbols)

IPC:G06T15/-; H04N5/-

Documentation searched other than minimum documentation to the extent that such documents are included in the fields searched

Electronic data base consulted during the international search (name of data base and, where practicable, search terms used)

CNTXT; CNABS; VEN; ENTXT; USTXT; DWPI; IEEE; CNKI: 着色, 可变速着色, 场景, 纹理, 界面, UI, 相机, 摄像机, 摄影机, 摄录机, 速率, 速度, 位移, 深度, 亮度, 灰度, 遮挡, 遮蔽, 区域, 分区, 频率, 滤波, MVP矩阵, 变化矩阵, shad+, VRS, variable rate shading, camera, displacement, user interface, texture, depth, brightness, gray+, frequency domain

**C. DOCUMENTS CONSIDERED TO BE RELEVANT**

| Category* | Citation of document, with indication, where appropriate, of the relevant passages | Relevant to claim No. |
|---|---|---|
| A | CN 110868580 A (NVIDIA CORPORATION) 06 March 2020 (2020-03-06) description, paragraphs [0025]-[0162] | 1-20 |
| A | CN 113837920 A (HONOR DEVICE CO., LTD.) 24 December 2021 (2021-12-24) entire document | 1-20 |
| A | CN 113936089 A (HANGZHOU DOUKU SOFTWARE TECHNOLOGY CO., LTD.) 14 January 2022 (2022-01-14) entire document | 1-20 |
| A | CN 114210055 A (HONOR DEVICE CO., LTD.) 22 March 2022 (2022-03-22) entire document | 1-20 |
| A | US 2022245889 A1 (MICROSOFT TECHNOLOGY LICENSING, LLC) 04 August 2022 (2022-08-04) entire document | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 September 2023** | **12 September 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/103742**

| Patent document cited in search report | | | Publication date (day/month/year) | Patent family member(s) | | | Publication date (day/month/year) |
|---|---|---|---|---|---|---|---|
| CN | 110868580 | A | 06 March 2020 | US | 2020051290 | A1 | 13 February 2020 |
| | | | | US | 10930022 | B2 | 23 February 2021 |
| | | | | DE | 102019121200 | A1 | 13 February 2020 |
| | | | | US | 2021166441 | A1 | 03 June 2021 |
| | | | | US | 11308658 | B2 | 19 April 2022 |
| | | | | CN | 115379185 | A | 22 November 2022 |
| | | | | CN | 110868580 | B | 14 April 2023 |
| CN | 113837920 | A | 24 December 2021 | CN | 113837920 | B | 10 March 2023 |
| CN | 113936089 | A | 14 January 2022 | | None | | |
| CN | 114210055 | A | 22 March 2022 | CN | 114210055 | B | 01 July 2022 |
| US | 2022245889 | A1 | 04 August 2022 | WO | 2022164651 | A1 | 04 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210990935